# EUROPÄISCHE PATENTSCHRIFT

(11) **EP 2 505 343 B1**
(45) Veröffentlichungstag und Bekanntmachung des Hinweises auf die Patenterteilung: **23.07.2014**
(21) Anmeldenummer: 11004767.7
(22) Anmeldetag: 10.06.2011
(51) Int. Cl.: B29C 70/38

(54) **Faser-Legevorrichtung und Verfahren zum Herstellen eines Faserverbundbauteiles**
Fibre laying device and method for manufacturing a fibre compound component
Dispositif de pose de fibres et procédé de fabrication d'un composant en fibres composites

(30) Priorität: 13.04.2010 DE 102010015027
(43) Veröffentlichungstag der Anmeldung: 03.10.2012
(73) Patentinhaber: Deutsches Zentrum für Luft- und Raumfahrt e.V., 51147 Köln (DE)
(72) Erfinder: Kleineberg, Markus, 30966 Hemmingen (DE); Assing, Heiko, 38110 Braunschweig (DE); Röstermundt, Dirk, 31224 Peine (DE); Meyer, Matthias, Dr., 21614 Buxtehude (DE)
(74) Vertreter: Aisch, Sebastian

(56) Entgegenhaltungen:
- US-A- 4 588 466
- US-A1- 2005 247 396

## Beschreibung

Die Erfindung betrifft eine Faser-Legevorrichtung zur Herstellung eines Fasergeleges eines Faserverbundbauteils, mit einem Werkzeug zum Ablegen von Fasern. Gemäß einem zweiten Aspekt betrifft die Erfindung ein Verfahren zum Herstellen eines Faserverbundbauteils mit den Schritten: (i) Anordnen von Fasern in, an und/oder auf ein Werkzeug, so dass ein Fasergelege entsteht, und (ii) Aushärten des Fasergeleges, so dass ein Verbundteil-Rohling entsteht.

Faser-Legevorrichtungen, die auch als Fiber-Placement-Anlagen bezeichnet werden können, sind aus dem Stand der Technik bekannt und basieren bislang auf einem groß dimensionierten Portalsystem, welches in der Regel mit einem Fiberplacement-Kopf, der auch als Tapelegekopf bezeichnet wird, ausgestattet ist. Dabei hat der Ablegekopf die Dimension eines Kleinwagens mit häufig über einer Tonne Gewicht. Dazu kommt ein Faserspulensystem, welches ebenfalls mehrere Tonnen wiegen kann. Durch die hohe Masse sind die Beweglichkeit und die kinematischen Abläufe in ihrer Dynamik begrenzt. Bekannte Faser-Legevorrichtungen in Form von Portalsystemen erreichen daher in der Regel nur geringe Faser-Ablegeraten.

Durch die Größe der im Stand der Technik bekannten Portalanlagen ist die Flexibilität der Faser-Legevorrichtungen zudem stark eingeschränkt. So ist eine Faser-Legevorrichtung zumeist auf die Fertigung von nur gering gekrümmten Fasergelegen für Faserverbundbauteile ausgerichtet. Das Ablegen von Fasern zu komplexeren Geometrien ist aufgrund der Größe des Ablegekopfes meist nicht möglich. Nachteilig ist zudem, dass die Ablegegeschwindigkeit bei bekannten Faser-Legevorrichtungen dadurch begrenzt ist, dass an der Portalanlage nur ein Läufer befestigt werden kann, um Kollisionen zu vermeiden.

Aus der US 4,588,466 ist eine Vorrichtung gemäß dem Oberbegriff der Ansprüche 1 und 8 zum Legen von Fasern bekannt, bei der auf ein Schienensystem, deren Mitte sich ein Werkzeug zum Legen von Fasern befindet, ein Ablegekopf mit getrennten Bauelementen geführt wird. Dabei ist sowohl eine Faserbereitstellungseinrichtung vorgesehen, die über die gesamte Werkzeuglänge ein Faserband spannt, welches dann mit Hilfe von Niederhaltern auf das Werkzeug gedrückt wird.

Aus der US 2005/0247396 A1 ist eine Vorrichtung zum Legen von Fasergelegen bekannt, bei dem ein in der Mitte rotierendes Werkzeug von zwei Seiten mit Hilfe einer Faserlegevorrichtung bedient wird.

Der Erfindung liegt die Aufgabe zugrunde, Nachteile im Stand der Technik zu vermeiden.

Die Erfindung löst das Problem durch eine gattungsgemäße Faser-Legevorrichtung, die ein das Werkzeug umgebendes geschlossenes Schienensystem und zumindest zwei unabhängig von einander arbeitende Roboter aufweist, die von dem Schienensystem geführt bewegbar sind, insbesondere auf dem Schienensystem geführt bewegbar sind, und die jeweils zumindest einen Legekopf, der zum Legen der Fasern ausgebildet ist, aufweisen.

Gemäß einem zweiten Aspekt löst die Erfindung das Problem durch ein gattungsgemäßes Verfahren, bei dem das Anordnen der Fasern mittels zumindest simultan arbeitender Roboter erfolgt, die auf einem Schienensystem geführt bewegt werden und mittels zumindest einem Legekopf die Fasern legen.

Vorteilhaft an der Erfindung ist, dass es im Gegensatz zu herkömmlichen Portalanlagen möglich ist, mit mehreren Ablegeköpfen gleichzeitig an einem Werkzeug arbeiten zu können. Herkömmliche Portalanlagen sind in der Regel nur in der Lage, mit einem Ablegekopf zu arbeiten, der aber nicht universell einsatzfähig ist. Durch die Verwendung mehrerer Ablegeköpfe ist eine Spezialisierung und somit eine Prozessoptimierung möglich.

Das umgebende geschlossene Schienensystem erlaubt es zudem, einzelne Roboter im Fertigungsprozess ein- und/oder auszukoppeln, so dass Rüstzeiten der Roboter die Fertigungszeit im Wesentlichen nicht beeinflussen. Sofern einer der Roboter defekt sein sollte, kann dieser aufgrund des geschlossenen Schienensystems ausgekoppelt werden, so dass Stillstandszeiten verringert werden. Bei Portalsystemen nach dem Stand der Technik führt ein Fehler unmittelbar zum Stillstand der kompletten Anlage, was die Fertigungszeit des Faserverbundbauteils erhöht.

Aufgrund des modularen Aufbaus ist es zudem möglich, eine Vielzahl unterschiedlicher Faserverbundbauteile mit einer Faser-Legevorrichtung herzustellen. Es ist daher möglich, für unterschiedlichste Zwecke oder Bauteilgeometrien ein schnelles Anlagendesign zu entwerfen. Die Faser-Legevorrichtung muss nicht auf das Ablegen von Faserhalbzeugen beschränkt sein, sondern kann über handelsübliche Werkzeugwechselsysteme mit den unterschiedlichsten Endeffektoren ausgestattet sein, die eine endlose Anzahl an Bearbeitungsmöglichkeiten einer solchen Faser-Legevorrichtung ermöglichen. Ein klassisches Portalsystem ist auf eine Aufgabe ausgelegt und nur schwer auf andere Aufgaben adaptierbar.

Ein weiterer Vorteil ist, dass die erfindungsgemäße Faser-Legevorrichtung aus standardisierten Industriekomponenten aufgebaut werden kann, welche schnell und kostengünstig kombiniert werden können. Eine Portalanlage hingegen ist in der Regel eine prototypische Großanlage, die auf ihren jeweiligen Anwendungszweck hin ausgelegt und optimiert ist, was zu einem erhöhten Aufwand führt.

Im Rahmen der vorliegenden Erfindung wird unter dem Werkzeug insbesondere ein Objekt verstanden, das eine konturierte Fläche aufweist, die der gewünschten Kontur des späteren Faserverbundbauteils entspricht. Das Werkzeug kann damit auch als Form oder Formwerkzeug bezeichnet werden. In, an und/oder auf das Werkzeug werden die Fasern abgelegt, so dass sie in die gewünschte Form kommen.

Das einzelne Objekt, das der Roboter ablegt, wird als Roving oder Faserband bezeichnet. Die Gesamtheit aus mehreren Rovings oder Faserbändern wird als Fasergelege bezeichnet. Aus dem Fasergelege wird durch Aushärten in einer Aushärte-Vorrichtung, die Teil der Faser-Legevorrichtung sein können, ein Faserverbundbauteil-Rohling hergestellt.

Unter dem das Werkzeug umgebenden Schienensystem wird insbesondere eine Anordnung von Schienen verstanden, die so angeordnet sind, dass zumindest ein Roboter das Werkzeug von zumindest drei, insbesondere von allen Seiten und ggf. von oben erreichen kann.

Unter einem geschlossenen Schienensystem wird verstanden, dass zumindest ein Roboter von jeder Stelle, von der aus er Fasern auf dem Werkzeug ablegen kann, ohne Richtungswechsel auf dem Schienensystem so geführt bewegt werden kann, dass er die Stelle wieder erreicht. Dazu ist es möglich, dass das Schienensystem ringförmig um das Werkzeug geschlossen ist und der Roboter von jedem Punkt des Schienensystems aus das Werkzeug erreicht. Es ist aber auch möglich, dass das Schienensystem einen Schienenring umfasst, auf dem die Roboter das Werkzeug umrunden können, ohne in Kontakt mit dem Werkzeug kommen zu können, wobei dann Unterabschnitte des Schienensystems vorhanden sind, über die die Roboter so dicht ans Werkzeug gefahren werden können, dass sie dort Fasern ablegen können.

Unter einem Roboter wird insbesondere jede Vorrichtung verstanden, die über zumindest zwei, insbesondere aber drei, vier, fünf oder mehr einzeln automatisch ansteuerbare, motorisch bewegbare Achsen verfügt. Bei dem Roboter kann vorgesehen sein, dass er auf einer Plattform aufgebaut ist, die an dem Schienensystem geführt bewegbar ist. Etwaige Leistungselektronik kann ebenfalls auf der Plattform angeordnet sein.

Die Erfindung basiert auf dem Konzept, die Herstellung von Faserverbundstrukturen mittels mehrerer, unabhängig voneinander, parallel arbeitender Roboter zu bewerkstelligen, welche mittels herkömmlicher Industrieroboter und kleiner, flexibler Ablageköpfe in der Lage sind, ein Werkzeug parallel mit Faserhalbzeugen in Form von Rovings oder Faserbändern zu belegen. Die Roboter sind dazu in der Lage, auf dem Schienensystem am Werkzeug vorbeizufahren und während des Fahrvorgangs mitgeführtes Fasermaterial auf dem Werkzeug zu platzieren. Die Fahrtrichtung der Roboter ist beispielsweise programmtechnisch vorgegeben.

Vorzugsweise existiert eine Hauptarbeitsrichtung, so dass nachfolgende Roboter nicht kollidieren können. Im Gegensatz zu herkömmlichen Portalsystemen, auf denen Arbeitsstationen hin- und herfahren und sich dabei gegenseitig blockieren können, verfügt die erfindungsgemäße Faser-Legevorrichtung vorzugsweise über ein Kopplungssystem, auf dem die Roboter aus einer Linearbahn ausgekoppelt oder neu positioniert werden können, wie es von Eisenbahndrehkreuzen bekannt ist.

Vorzugsweise umfasst die Faser-Legevorrichtung ein Positionserfassungssystem zum Erfassen einer Position des zumindest einen Ablegekopfs relativ zum Werkzeug. Hierbei kann es sich beispielsweise um ein Triangulationssystem handeln, bei dem die Position des Ablegekopfs durch Anpeilen des Ablegekopfs beispielsweise mittels Laserstrahlen erfolgt. Alternativ oder zusätzlich ist es auch möglich, dass die Position des Ablegekopfs durch Messung der Achspositionen des Roboters zueinander bestimmt wird. Vorzugsweise hat die Positionserfassungsvorrichtung eine absolute Genauigkeit von mindestens 50 Mikrometern.

Vorzugsweise umfasst die Faser-Legevorrichtung eine Mehrzahl an Robotern, die ausgebildet sind, um gleichzeitig an einem Werkzeug zu arbeiten. Besonders günstig ist es, wenn die Faser-Legevorrichtung zumindest zwei, insbesondere sich unterscheidende, Werkzeuge aufweist. An diesen Werkzeugen kann die Mehrzahl an Robotern simultan arbeiten. Das führt zu einer besonders flexiblen Faser-Legevorrichtung, die in der Lage ist, mehrere Fasergelege gleichzeitig herzustellen.

Gemäß einer bevorzugten Ausführungsform weist zumindest einer der Roboter einen Mehrfach-Kopf auf, wobei der Ablegekopf Teil des Mehrfach-Kopfes ist. Insbesondere umfasst der Mehrfachkopf zumindest ein Bearbeitungswerkzeug, beispielsweise ein Zerspanwerkzeug.

Gemäß einer bevorzugten Ausführungsform ist das Schienensystem so ausgebildet, das ein im Werkzeug angeordnetes Fasergelege von zumindest drei Seiten von den zumindest zwei Robotern erreichbar ist. Vorteilhaft hieran ist, dass zwei Roboter gleichzeitig am Fasergelege arbeiten können, was die Bearbeitungszeit reduziert.

Vorzugsweise weist das Schienensystem einen ersten Schienenabschnitt, auf dem der Roboter autonom bewegbar ist, einen zweiten Schienenabschnitt, auf dem der Roboter autonom bewegbar ist und der mit dem ersten Schienensystem einen Winkel von mehr als 30° und/oder weniger als 150°, einschließt, und zumindest eine Drehvorrichtung zum Umsetzen des Roboters von einem Schienenabschnitt auf den anderen auf.

Günstig ist es insbesondere, wenn der erste Schienenabschnitt und der zweite Schienenabschnitt gradlinig verlaufen. So können sie sich beispielsweise entlang einer Längsseite des Werkzeugs erstrecken. Durch die Drehvorrichtung ist gewährleistet, dass die Roboter auf engstem Raum die Richtung ändern können. Insbesondere kann vorgesehen sein, dass alle Schienenabschnitte, die so um das Werkzeug angeordnet sind, dass es den Robotern zugänglich ist, gradlinig verlaufen. In diesem Fall ist es möglich, die Roboter mit hoher Genauigkeit zu positionieren, da diese lediglich für den Geradeauslauf ausgebildet sein müssen. Durch die Drehvorrichtung wird dann sichergestellt, dass das Schienensystem das Werkzeug umgibt und geschlossen ist.

Vorzugsweise umfasst das Schienensystem zumindest vier Schienenabschnitte und zumindest vier Drehvorrichtungen. Es ist dann möglich, ausschließlich unter Verwendung von Drehvorrichtungen auf geraden Schienenabschnitten um das Werkzeug herumzufahren.

Gemäß einer bevorzugten Ausführungsform sind die Roboter und die Schienen so ausgebildet, dass die Roboter mittels der Schienen mit elektrischem Strom versorgbar sind. Beispielsweise umfasst das Schienensystem eine Stromversorgungseinheit, die so ausgebildet ist, dass die Roboter mittels Schleifkontakten mittels der Schienen mit Strom versorgt werden. Vorteilhaft hieran ist, dass Kabel entbehrlich sind, so dass Fehler durch sich verhakende Kabel ausgeschlossen sind.

Besonders bevorzugt sind die Schienen Rundschienen, an den die Roboter mittels Kugeln geführt sind. Unter einer Rundschiene wird insbesondere eine Schiene verstanden, deren Kopf einen gekrümmten Querschnitt, insbesondere einen teilkreisförmigen Querschnitt aufweist. Durch die an die Schiene angreifenden Rollen wird eine hohe Genauigkeit erzielbar.

Vorzugsweise weist das Schienensystem zumindest eine Auskoppelstelle auf, über die ein Roboter auf einer Ausrüststrecke zum Neubestücken oder Aufrüsten bewegbar ist. Unter einer Ausrüststrecke wird insbesondere ein Teil des Schienensystems verstanden, das so weit vom Werkzeug entfernt ist, dass der Roboter es nicht mit seinem Ablegekopf erreichen kann. Die Ausrüststrecke kann beispielsweise an einem Bestückungsautomaten vorbeiführen, mittels dem der Roboter mit Fasermaterial neu bestückt werden kann.

Vorzugsweise umfasst die Faser-Legevorrichtung eine berührungsfreie Kontur-Erfassungsvorrichtung, die angeordnet ist zum Erfassen einer Kontur des Fasergeleges und/oder des Faserverbundteil-Rohlings. Beispielsweise ist die Kontur-Erfassungsvorrichtung ausgebildet zum Durchführen eines Lichtschnittverfahrens, insbesondere eines Laser-Lichtschnittverfahrens. Auf diese Weise ist eine In-Prozess-Qualitätsprüfung möglich, mittels der etwaige Formabweichungen des Fasergeleges rasch erkannt und beseitigt werden können.

Vorzugsweise sind die Roboter so ausgebildet, dass sie eine elektrische Steuerung und/oder einen Umrichter aufweisen, um elektrischen Strom der notwendigen Frequenz herzustellen. Vorzugsweise ist jeder Roboter als eine autarke Einheit ausgebildet, das heißt, dass er einen digitalen Speicher aufweist, in dem ein vollständiges Bearbeitungsprogramm abgelegt ist. Die Faser-Legevorrichtung kann einen Leitrechner aufweisen, der beispielsweise über ein kabelloses Netzwerk mit den Robotern kommuniziert und diesen durchzuführende Bearbeitungsprogramme zuweist.

In einer bevorzugten Ausführungsform sind zumindest einige der Roboter ausgebildet, um sich an dem bereits gelegten Fasergelege und/oder dem Werkzeug zu referenzieren. In anderen Worten sind die Roboter eingerichtet zum Erfassen einer Markierung des Werkzeugs, wobei das Programm, gemäß dem die Roboter die Rovings oder Faserbänder ablegen, sich auf Koordinaten bezieht, die in einem Werkzeug-Koordinatensystem angegeben sind. Das Werkzeug-Koordinatensystem ist unveränderlich relativ zum Werkzeug, möglicherweise aber variable relativ zum Schienensystem.

Ein erfindungsgemäßes Verfahren umfasst vorzugsweise ein Aushärten des Fasergeleges, so dass ein Faserverbundbauteil-Rohling entsteht. Günstig ist es zudem, wenn das Verfahren den Schritt eines Kompaktierens des Fasergeleges aufweist, das beispielsweise mittels eines Vakuumsacks durchgeführt werden kann. Dazu wird das Werkzeug mit einem Vakuumsack umgeben und nachfolgend wird der Vakuumsack evakuiert. Der von außen wirkende Luftdruck kompaktiert das Fasergelege. In diesem Zustand wird das kompaktierte Fasergelege in einem Autoklaven ausgehärtet. Das Aushärten erfolgt vorzugsweise unter Überdruck und/oder erhöhter Temperatur.

Im Folgenden wird die Erfindung anhand eines Ausführungsbeispiels näher erläutert. Dabei zeigt
- Figur 1: ein Funktionsschema einer erfindungsgemäßen Faser-Legevorrichtung,
- Figur 2: eine dreidimensionale Ansicht einer erfindungsgemäßen Faser-Legevorrichtung,
- Figur 3: eine zweite perspektivische Ansicht der Faser-Legevorrichtung gemäß Figur 2 und
- Figur 4: eine zweite Ausführungsform einer erfindungsgemäßen Faser-Legevorrichtung.

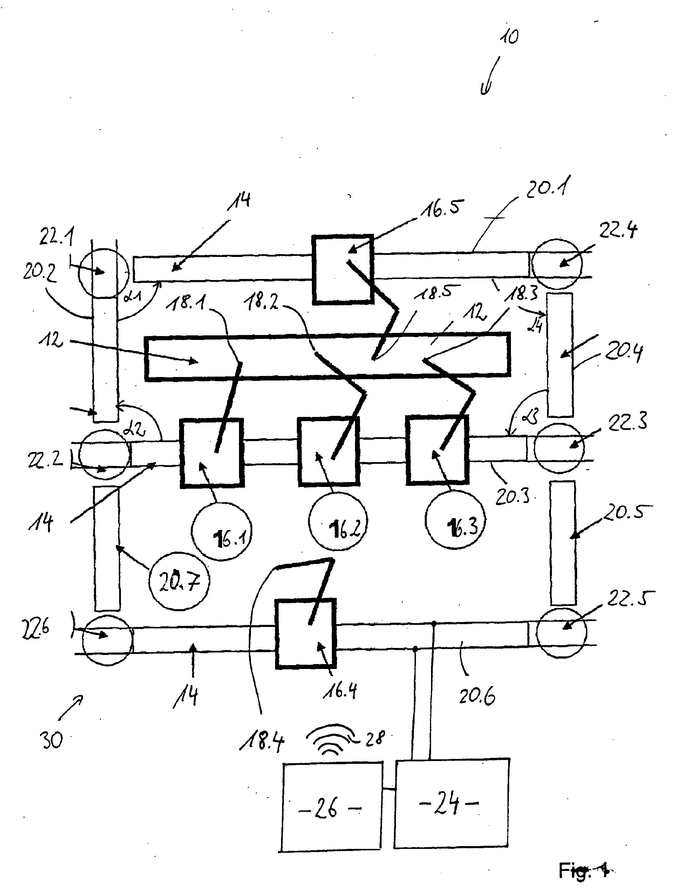

Figur 1 zeigt eine Faser-Legevorrichtung 10 mit einem Werkzeug 12 zum Ablegen von Rovings oder Faserbändern. Das Werkzeug 12 ist von einem Schienensystem 14 umgeben, auf dem Roboter 16.1, 16.2, ..., 16.5 geführt bewegbar sind. Jeder der Roboter weist einen schematisch eingezeichneten Ablegekopf 18.1, 18.2, ...18.6, mittels denen Fasern auf dem Werkzeug platziert werden können.

Das Schienensystem 14 umfasst Schienenabschnitte 20.1, 20.2, 20.3, 20.4, 20.5, 20.6 und 20.7 Vier Schienenabschnitte 20.1. 20.2., 20.3, 20.4 verlaufen gradlinig, wobei zwei Schienenabschnitte, nämlich 20.3 und 20.1, einander parallel gegenüber liegen. Auch die Abschnitte 20.2. und 20.4 liegen einander gegenüber.

Zwischen dem ersten Schienenabschnitt 20.1 und dem zweiten Schienenabschnitt 20.2 ist ein Winkel α1 von 90° eingeschlossen. Auf gleiche Weise ist zwischen dem zweiten Schienenabschnitt 20.2 und dem dritten Schienenabschnitt 20.3 ein Winkel α2 von ebenfalls 90° eingeschlossen. Das gleiche gilt für einen Winkel α3 zwischen dem dritten Schienenabschnitt 20.3 und dem vierten Schienenabschnitt 20.4 sowie einem Winkel α4 zwischen dem vierten Schienenabschnitt 20.4 und dem ersten Schienenabschnitt 20.1.

Die vier Schienenabschnitte 20.1, ..., 20.4 sind paarweise durch Drehvorrichtungen 22.1, 22.2, 22.3 und 22.4 verbunden. Mittels jeder der Drehvorrichtungen 22 (Bezugszeichen ohne Zählsuffix bezeichnen im Folgenden ein Objekt jeweils als solches) ist es möglich, einen Roboter 16 von einem Schienenabschnitt auf den benachbarten umzusetzen. Im vorliegenden Fall sind die Drehvorrichtungen eingerichtet, um den Roboter um jeweils 90° zu drehen.

Die Faser-Legevorrichtung 10 weist eine Stromversorgung 24 auf, die die Schienen des Schienensystems 14 mit Strom versorgt. Über die Schienen werden die Roboter 16 bestromt.

Die Faser-Legevorrichtung 10 besitzt zudem einen Leitrechner 26, der über Funksignale 28 die Roboter 16 ansteuert. Die Roboter 16 sind als autarke Systeme ausgebildet, die, wenn sie einmal einen Auftrag erhalten haben, diesen ohne weitere Rückkopplung mit dem Leitrechner 26 ausführen können.

Das Schienensystem 14 besitzt eine Auskoppelstelle, im vorliegenden Fall in Form der Drehvorrichtung 22.2, über die ein Roboter 16 auf eine Ausrüststrecke 30 geleitet werden kann. Die Ausrüststrecke 30 umfasst im vorliegenden Fall die Schienenabschnitte 20.5, 20.6 und 20.7 sowie Drehvorrichtungen 22.5 und 22.6. Der Roboter 16.4, der sich auf der Ausrüststrecke 30 befindet, ist von dem Werkzeug so beabstandet, dass er es nicht mehr erreichen kann. Der Roboter 16.4 kann auf der Ausrüststrecke beispielsweise mit neuem Fasermaterial oder einem neuen Bearbeitungswerkzeug ausgestattet werden kann.

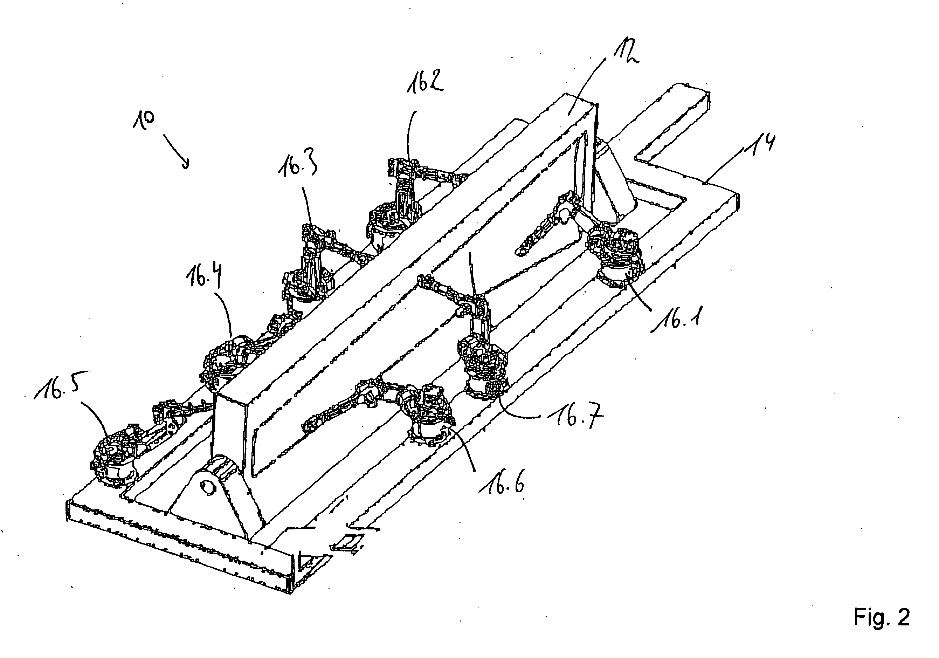

Figur 2 zeigt eine perspektivische Ansicht einer zweiten Ausführungsform einer erfindungsgemäßen Faser-Legevorrichtung 10, bei der das Werkzeug 12 starr mit dem Schienensystem 14 gekoppelt ist. Das hat den Vorteil, dass eine besonders hohe Genauigkeit erreichbar ist. Das Werkzeug 12 ist um seine Längsachse, die im vorliegenden Fall eine Horizontalachse ist, schwenkbar gelagert.

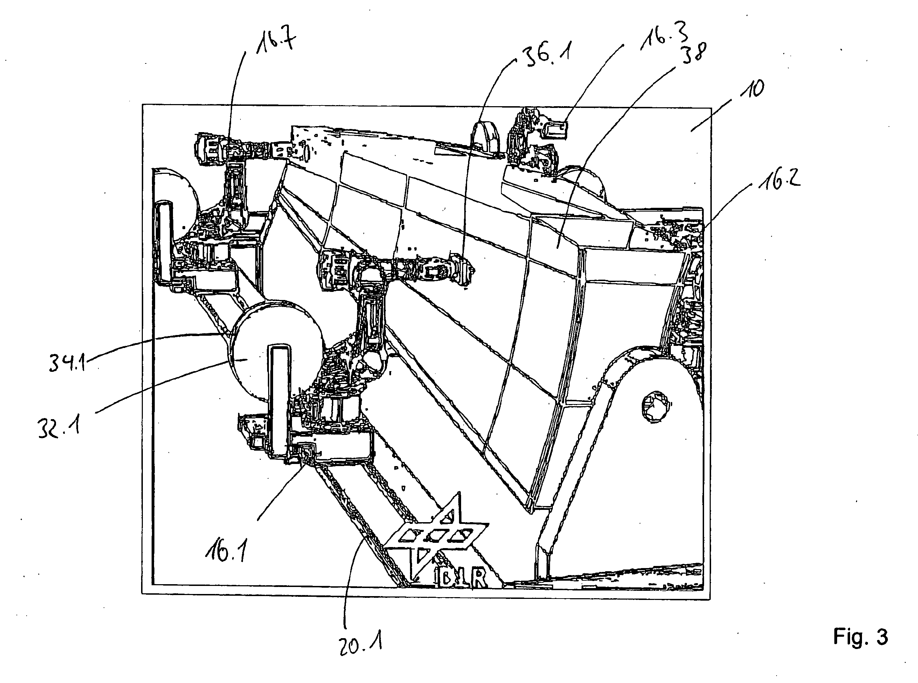

Figur 3 zeigt eine Detailansicht der Faser-Legevorrichtung 10 gemäß Figur 2, bei der zu erkennen ist, das der Roboter 16 eine Faser-Lagervorrichtung 32 aufweist, auf der Fasermaterial 34.1 aufgenommen ist. Das Fasermaterial 34.1 wird zu einem Ablegekopf 36.1 geleitet, mittels dem das Fasermaterial 34.1 auf bzw. an das Werkzeug 12 platziert und dort fixiert wird. An dem entstehenden Fasergelege 38 arbeiten zumindest vier Roboter, was die Zeit zur Herstellung drastisch verkürzt.

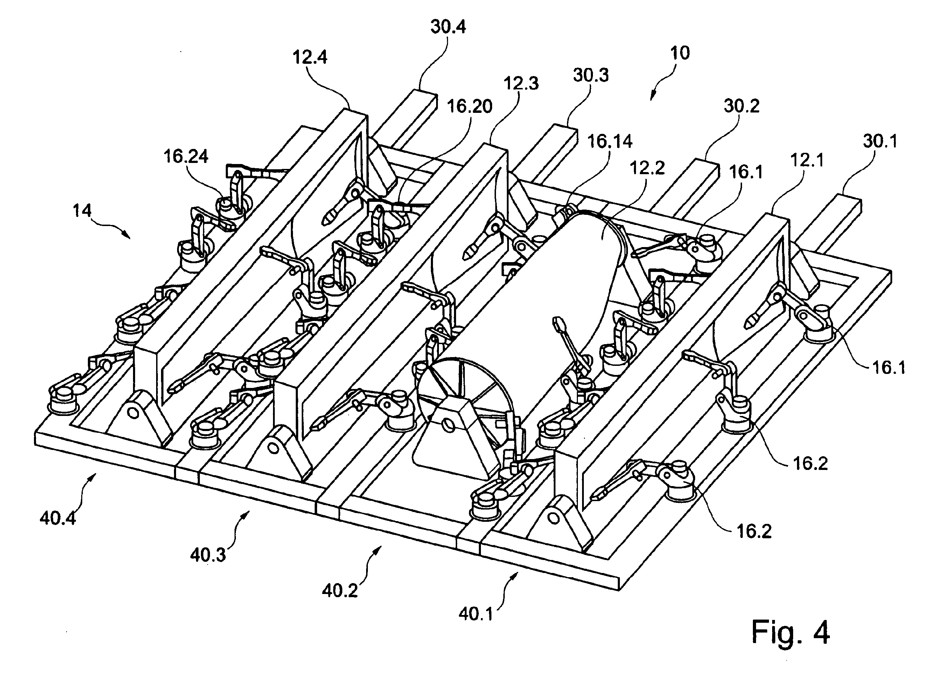

Figur 4 zeigt eine weitere alternative Ausführungsform einer erfindungsgemäßen Faser-Legevorrichtung 10, bei der vier Werkzeuge 12.1, 12.2, 12.3, 12.4 vorhanden sind, die mit insgesamt 24 Robotern, 16.1. ..., 16.24 bearbeitet werden. Das Schienensystem 14 weist für jedes Werkzeug 12 einen Ring 40 aus Schienen auf, der das Werkzeug umgibt. So wird das Werkzeug 12.1 vom Ring 40.1 umgeben, das Werkzeug 12.2 vom Ring 40.2, und so weiter. Die einzelnen Ringe sind miteinander verbunden, so dass jeder Roboter zu jedem Werkzeug gefahren werden kann. Jeder Ring weist zudem eine Ausrüststrecke auf.

### Bezugszeichenliste

- 10: Faser-Legevorrichtung
- 12: Werkzeug
- 14: Schienensystem
- 16: Roboter
- 18: Ablegekopf

- 20: Schienenabschnitt
- 22: Drehvorrichtung
- 24: Stromversorgung
- 26: Leitrechner
- 28: Funksignale

- 30: Ausrüststrecke
- 32: Faser-Lagervorrichtung
- 34: Fasermatte
- 36: Ablegekopf
- 38: Fasergelege

- 40: Ring

- α1: Winkel

## Patentansprüche

1. Faser-Legevorrichtung zur Herstellung eines Fasergeleges (38) eines Faserverbundbauteils, mit
(a) einem Werkzeug (12) zum Ablegen von Fasern (34),
(b) ein das Werkzeug (12) umgebendes geschlossenes Schienensystem (14) und **gekennzeichnet durch**
(c) zumindest zwei unabhängig von einander arbeitende Roboter (16), die
- von dem chienensystem (14) geführt bewegbar sind, und
- jeweils zumindest einen Ablegekopf (18), der zum Legen von Fasern (34) ausgebildet ist, aufweisen.

2. Faser-Legevorrichtung nach Anspruch 1, **dadurch gekennzeichnet, dass** das Schienensystem (14) so ausgebildet ist, dass ein im Werkzeug (12) angeordnetes Fasergelege (38) von zumindest drei Seiten von den zumindest zwei Robotern (16) erreichbar ist.

3. Faser-Legevorrichtung nach einem der vorstehenden Ansprüche, **dadurch gekennzeichnet, dass** das Schienensystem (14)
- einen ersten Schienenabschnitt (20.1), auf dem der Roboter (16) autonom bewegbar ist,
- einen zweiten Schienenabschnitt (20.2), auf dem der Roboter (16) autonom bewegbar ist und der mit dem ersten Schienenabschnitt einen Winkel (α) von mehr als 30° und weniger als 150° einschließt, und
- zumindest eine Drehvorrichtung (22.1) zum Umsetzen des Roboters (16) von einem Schienenabschnitt (20) auf den anderen aufweist.

4. Faser-Legevorrichtung nach einem der vorstehenden Ansprüche, **gekennzeichnet durch** zumindest vier Schienenabschnitte (20) und zumindest vier Drehvorrichtungen (22).

5. Faser-Legevorrichtung nach einem der vorstehenden Ansprüche, **dadurch gekennzeichnet, dass** die Roboter (16) und die Schienen des Schienensystems (14) so ausgebildet sind, dass die Roboter (16) mittels der Schienen mit elektrischem Strom versorgbar sind.

6. Faser-Legevorrichtung nach einem der vorstehenden Ansprüche, **dadurch gekennzeichnet, dass** das Schienensystem (14) zumindest eine Auskoppelstelle aufweist, über die ein Roboter (16) auf eine Ausrüststrecke (30) zum Neubestücken und/oder Aufrüsten bewegbar ist.

7. Faser-Legevorrichtung nach einem der vorstehenden Ansprüche, **gekennzeichnet durch** eine berührungsfreie Kontur-Erfassungsvorrichtung, die angeordnet ist zum Erfassen einer Kontur des Fasergeleges (38) und/oder eines Faserverbundbauteil-Rohlings.

8. Verfahren zum Herstellen eines Faserverbundbauteils, mit den Schritten:
(i) Anordnen von Fasern (34) in, an und/oder auf ein Werkzeug (12), so dass ein Fasergelege (38) entsteht, und
(ii) Herstellen des Faserverbundbauteils aus dem Fasergelege (38),
(iii) das Anordnen der Fasern (34) mittels zumindest zwei simultan arbeitender Roboter (16) erfolgt, die
- auf einem das Werkzeug umgebenden geschlossenen Schienensystem (14) geführt bewegt werden und **dadurch gekennzeichnet, dass** die Roboter unabhängig von einander arbeiten und jeweils zumindest einem Ablegekopf (18) aufweisen, die
- die Fasern (34) legen.

9. Verfahren nach Anspruch 8, **dadurch gekennzeichnet, dass** das Anordnen der Fasern (34) während eines Bewegens des Roboters (16) entlang des Werkzeugs (12) erfolgt.

10. Verfahren nach einem der Ansprüche 8 oder 9, **gekennzeichnet durch** den Schritt:
- vor dem Anordnen der Fasern (34) Bestimmen einer Position des Roboters (16) anhand seiner Position auf der Schiene und/oder relativ zum Werkzeug (12).

## Claims

1. Fibre-laying device for manufacturing a fibre laminate (38) of a fibre-composite component, having
a) a tool (12) for placing fibres (34),
b) a closed rail system (14) which surrounds the tool (12), and **characterized by**
c) at least two robots (16) which operate independently of one another and which
- are movable in a guided manner by the rail system (14), and
- in each case have at least one placing head (18) which is configured for laying fibres (34).

2. Fibre-laying device according to Claim 1, **characterized in that** the rail system (14) is configured such that a fibre laminate (38) arranged in the tool (12) can be reached from at least three sides by the at least two robots (16).

3. Fibre-laying device according to one of the preceding claims, **characterized in that** the rail system (14) has
- a first rail portion (20.1) on which the robot (16) is autonomously movable,
- a second rail portion (20.2) on which the robot (16) is autonomously movable and which, with the first rail portion, encloses an angle (α) of more than 30° and less than 150°, and
- at least one rotation device (22.1) for transferring the robot (16) from one rail portion (20) to the other.

4. Fibre-laying device according to one of the preceding claims, **characterized by** at least four rail portions (20) and at least four rotation devices (22).

5. Fibre-laying device according to one of the preceding claims, **characterized in that** the robots (16) and the rails of the rail system (14) are configured such that the robots (16) can be supplied with electric power by means of the rails.

6. Fibre-laying device according to one of the preceding claims, **characterized in that** the rail system (14) has at least one decoupling point via which, for re-loading and/or upgrading, a robot (16) is movable onto an equipping track (30).

7. Fibre-laying device according to one of the preceding claims, **characterized by** a contactless contour-detection device which is arranged for detecting a contour of the fibre laminate (38) and/or of a fibre-composite component blank.

8. Method for manufacturing a fibre-composite component, comprising the following steps:
(i) arranging of fibres (34) in, at and/or on a tool (12), such that a fibre laminate (38) is created,
(ii) manufacturing the fibre-composite component from the fibre laminate (38),
(iii)arranging of the fibres (34) takes place by means of at least two simultaneously operating robots (16) which
- are moved in a guided manner on a closed rail system (14) which surrounds the tool, and **characterized in that** the robots operate independently of one another and have in each case at least one placing head (18) which lays the fibres (38).

9. Method according to Claim 8, **characterized in that** arranging of the fibres (34) takes place during movement of the robot (16) along the tool (12).

10. Method according to either Claim 8 or 9, **characterized by** the step of:
- determining, prior to arranging of the fibres (34), a position of the robot (16) by means of its position on the rail and/or in relation to the tool (12).

## Revendications

1. Dispositif de pose de fibres pour créer une nappe de fibres (38) d'un composant composite fibreux, comprenant
(a) un outil (12) pour poser des fibres (34),
(b) un système de rails fermé (14) entourant l'outil (12) et
**caractérisé par**
(c) au moins deux robots (16) fonctionnant indépendamment l'un de l'autre, qui
- sont déplaçables de manière guidée par le système de rails (14), et
- qui présentent à chaque fois au moins une tête de pose (18) qui est réalisée pour poser des fibres (34).

2. Dispositif de pose de fibres selon la revendication 1, **caractérisé en ce que** le système de rails (14) est réalisé de telle sorte qu'une nappe de fibres (38) disposée dans l'outil (12) puisse être atteinte par au moins trois côtés par les au moins deux robots (16).

3. Dispositif de pose de fibres selon l'une quelconque des revendications précédentes, **caractérisé en ce que** le système de rails (14) présente
- une première portion de rail (20.1), sur laquelle le robot (16) peut être déplacé de manière autonome,
- une deuxième portion de rail (20.2), sur laquelle le robot (16) peut être déplacé de manière autonome et qui forme avec la première portion de rail un angle (α) de plus de 30° et de moins de 150°, et
- au moins un dispositif rotatif (22.1) pour faire passer le robot (16) d'une portion de rail (20) à l'autre.

4. Dispositif de pose de fibres selon l'une quelconque des revendications précédentes, **caractérisé par** au moins quatre portions de rails (20) et au moins quatre dispositifs rotatifs (22).

5. Dispositif de pose de fibres selon l'une quelconque des revendications précédentes, **caractérisé en ce que** les robots (16) et les rails du système de rails (14) sont réalisés de telle sorte que les robots (16) puissent être alimentés en courant électrique au moyen des rails.

6. Dispositif de pose de fibres selon l'une quelconque des revendications précédentes, **caractérisé en ce que** le système de rails (14) présente au moins un point de découplage par le biais duquel un robot (16) peut être déplacé sur une section d'équipement (30) en vue d'un réassortiment et/ou d'un rééquipement.

7. Dispositif de pose de fibres selon l'une quelconque des revendications précédentes, **caractérisé par** un dispositif de détection de contour sans contact qui est disposé dé manière à détecter un contour de la nappe de fibres (38) et/ou d'une pièce brute d'un composant composite fibreux.

8. Procédé de fabrication d'un composant composite fibreux, comprenant les étapes suivantes :
(i) agencement de fibres (34) dans, au niveau de et/ou sur un outil (12) de telle sorte que l'on obtienne une nappe de fibres (38), et
(ii) fabrication du composant composite fibreux à partir de la nappe de fibres (38),
(iii) agencement des fibres (34) au moyen d'au moins deux robots (16) fonctionnant de manière simultanée, lesquels
- sont déplacés de manière guidée sur un système de rails fermé (14) entourant l'outil et
**caractérisé en ce que** les robots fonctionnent indépendamment l'un de l'autre et présentent à chaque fois au moins une tête de pose (18) qui
- pose les fibres (34).

9. Procédé selon la revendication 8, **caractérisé en ce que** l'agencement des fibres (34) se produit pendant un déplacement du robot (16) le long de l'outil (12).

10. Procédé selon l'une quelconque des revendications 8 ou 9, **caractérisé par** l'étape suivante :
- avant l'agencement des fibres (34), détermination d'une position du robot (16) à l'aide de sa position sur le rail et/ou par rapport à l'outil (12).
